# EUROPÄISCHE PATENTANMELDUNG

(11) **EP 1 258 377 A1**
(43) Veröffentlichungstag der Anmeldung: **20.11.2002**
(21) Anmeldenummer: 01112206.6
(22) Anmeldetag: 18.05.2001
(51) Int. Cl.: B60J 5/04

(54) **Trägervorrichtung für einzelne Funktionskomponenten einer Fahrzeugtür zum Einbau in dieser**

(71) Anmelder: Ford Global Technologies, Inc., A subsidiary of Ford Motor Company, Dearborn, Michigan 48126 (US)
(72) Erfinder: Schmidt, Rüdiger, 50171 Kerpen (DE)
(74) Vertreter: Drömer, Hans-Carsten, Dr.-Ing.

(57) **Zusammenfassung**

Die Trägervorrichtung für einzelne Funktionskomponenten einer Fahrzeugtür zum Einbau in dieser ist versehen mit einer Grundplatte (20), die eine erste Aufnahme (22) für eines von mehreren ersten Einbauelementen (24) aufweist, an der mindestens ein Teil einer Funktionskomponente (28) anbringbar ist, wobei sich jedes der mehreren ersten Einbauelemente (24) in die Aufnahme (22) einsetzen lässt und die Funktionskomponenten (28) oder Teile davon an den mehreren ersten Einbauelementen (24) unterschiedlich positionierbar und/oder anbringbar sind.

## Beschreibung

Die Erfindung betrifft eine Trägervorrichtung für einzelne Funktionskomponenten einer Fahrzeugtür zum Einbau in dieser sowie eine mit einer derartigen Trägervorrichtung versehene Fahrzeugtür und die Verwendung einer derartigen Trägervorrichtung für einzelne Fahrzeugkomponenten unterschiedlicher Fahrzeugtüren.

Die einzelnen Funktionskomponenten einer Fahrzeugtür, wie beispielsweise Lautsprecher, Fensterheber (manuell oder motorisch), Türschloss, Abdeckelement zur Erschwerung der Manipulation des Türschlosses, Armlehne, Türverkleidung und aktives oder passives Sicherheitselement sind im Regelfall an einer Trägerplatte angeordnet, die mit entsprechenden Aufnahmen bzw. Anbringungsmöglichkeiten für diese Funktionskomponenten ausgestattet und an die jeweilige Fahrzeugtür individuell angepasst ist. Beispiele für derartige Konzepte finden sich in WO-A-99/36281, WO-A-98/38056 und EP-A-0 936 092.

Ein gewisser Nachteil der bekannten Trägervorrichtungen besteht darin, dass die Grundplatten jeweils an die Tür des Fahrzeuges, für die sie verwendet werden, angepasst sein muss. Dies ist insbesondere im Hinblick auf einen erhöhten Aufwand bei der Entwicklung, Herstellung und Lagerhaltung von Nachteil.

Der Erfindung liegt die Aufgabe zu Grunde, eine Trägervorrichtung für einzelne Funktionskomponenten einer Fahrzeugtür zum Einbau in dieser zu schaffen, die sich in einer Vielzahl von Fahrzeugtüren und für eine Vielzahl von Funktionskomponenten verwenden lässt.

Zur Lösung dieser Aufgabe wird mit der Erfindung eine Trägervorrichtung für einzelne Funktionskomponenten einer Fahrzeugtür zum Einbau in dieser, wobei die Trägervorrichtung versehen ist mit
- einer Grundplatte, die eine erste Aufnahme für eines von mehreren ersten Einbauelementen aufweist, an der mindestens ein Teil einer Funktionskomponente anbringbar ist,
- wobei sich jedes der mehreren ersten Einbauelemente in die Aufnahme einsetzen lässt und die Funktionskomponenten oder Teile davon an den mehreren ersten Einbauelementen unterschiedlich positionierbar und/oder anbringbar sind.

Die erfindungsgemäße Trägervorrichtung weist eine Grundplatte auf, die mit mindestens einer ersten Aufnahme für eines von mehreren ersten Einbauelementen versehen ist. An diesen Einbauelementen lassen sich nun unterschiedliche Funktionskomponenten einer ersten Gruppe von Funktionskomponenten anbringen. Alternativ dazu ist es auch möglich, dass sich an diesen ersten Einbauelementen Teile dieser Funktionskomponenten anbringen lassen. Jedes der ersten Einbauelemente weist eine Aufnahme für die Funktionskomponente auf. Die Funktionskomponenten sind an den mehreren ersten Einbauelementen unterschiedlich positionierbar bzw. anbringbar.

Auf das Beispiel des Einbaus eines Lautsprechers in einer Fahrzeugtür bezogen, ist das erfindungsgemäße Konzept dahingehend zu verstehen, dass mehrere erste Einbauelemente existieren, deren Aufnahmen den unterschiedlichen Bauformen von Lautsprechern angepasst sind. Sämtliche ersten Einbauelemente weisen die gleiche Schnittstelle zur ersten Aufnahme der Grundplatte auf. Soll also beispielsweise die Grundplatte für einen ersten Fahrzeugtürtyp eingesetzt werden, bei der ein erster Lautsprechertyp Verwendung findet, so wird das bezüglich ihrer Aufnahme an den ersten Lautsprechertyp angepasste erste Einbauelement verwendet. Wird hingegen die Grundplatte bei einem zweiten Fahrzeugtürtyp eingesetzt, für den ein anderer Lautsprechertyp Verwendung finden soll, so benötigt man dasjenige der ersten Einbauelemente, dessen Aufnahme an diesen anderen Lautsprechertyp angepasst ist. Es muss also nicht mehr die gesamte Grundplatte sondern lediglich das erste Einbauelement gewechselt werden, um die Trägervorrichtung für Fahrzeugtüren unterschiedlicher Typen einsetzen zu können.

In gleicher Weise kann man bei der erfindungsgemäßen Trägervorrichtung verfahren, wenn es um andere in eine Fahrzeugtür zu integrierende Funktionskomponenten geht. Hier sei beispielsweise an manuelle oder motorische Fensterheber, aktive oder passive Sicherheitselemente, Türschlösser o.dgl. gedacht. Sofern diese Funktionskomponenten an der Grundplatte der Trägervorrichtung angebracht werden, sind sie zweckmäßigerweise mit ihnen speziell zugeordneten zweiten und weiteren Einbauelementen mit der Grundplatte verbunden. Diese Einbauelemente weisen dann wiederum an die Größe, Position und Kontur der jeweiligen Funktionskomponente angepasste Aufnahmen auf.

Die ersten und, soweit vorhanden, die zweiten und weiteren Einbauelemente weisen also unterschiedlich ausgestaltete und/oder angeordnete Aufnahmen für die den Einbauelementen jeweils zugeordneten Funktionskomponenten oder Teile davon auf. Durch den Einbau der Einbauelemente in die jeweils zugeordneten Aufnahmen der Grundplatte werden also individuell an den jeweiligen Fahrzeugtyp und damit an das Fahrzeug selbst angepasste Trägervorrichtungen geschaffen, was auf Grund der Mehrfachverwendung ein und derselben Grundplatte im Hinblick auf die Herstellung, die Lagerhaltung und die Entwicklung von Vorteil ist.

In vorteilhafter Weiterbildung der Erfindung ist ferner vorgesehen, dass die Grundplatte mehrteilig ist und ein Basiselement aufweist, an dem eines von mehreren ersten Anbauelementen befestigbar ist, wobei die ersten Anbauelemente unterschiedlich ausgestaltet sind. Hierbei ist es besonders zweckmäßig, wenn die ersten Anbauelemente derart unterschiedlich ausgestaltet sind, dass sich die aus dem Zusammenbau des Basiselements und jeweils eines unterschiedlichen ersten Anbauelements ergebenden Grundplatten in mindestens einer Dimension unterscheiden.

Eine gemäß dieser Weiterbildung der Erfindung mehrteilig ausgebildete Grundplatte hat den Vorteil, dass sich die Trägervorrichtung durch Kombination ein und desselben Basiselements mit unterschiedlichen ersten Anbauelementen für die vorderen Fahrzeugtüren bei sowohl einer 2- bzw. 3-Türen-Variante als auch einer 4- bzw. 5-Türen-Variante ein und desselben Fahrzeugs verwenden lässt. Hierbei variiert nämlich die Länge der vorderen Fahrzeugtüren. Dies wird bezüglich der Trägervorrichtung bei der zuvor beschriebenen Variante der Erfindung dadurch berücksichtigt, dass für die 2- bzw. 3-Türen-Variante ein Basiselement mit einem "kürzeren" ersten Anbauelement kombiniert wird als im Falle einer 3- bzw. 5-Türen-Variante, bei der das Basiselement mit einem mit einem "längeren" ersten Anbauelement kombiniert wird.

Dieses Konzept kann noch weiterentwickelt werden, in dem sich an dem Basiselement mehrere Anbauelemente anbringen lassen.

Wie oben dargelegt, sind die ersten und, sofern vorhanden, die zweiten Aufnahmen in der Grundplatte der Trägervorrichtung ausgebildet. Bei Unterteilung der Grundplatte in ein Basiselement und ein oder mehrere Anbauelemente können diese Aufnahmen entweder vollständig im Basiselement oder vollständig in den Anbauelementen oder aber auch in den Übergangsbereichen zwischen dem Basiselement und den Anbauelementen ausgebildet sein.

Die Verbindung der Einbauelemente mit der Grundplatte sowie der Anbauelemente mit dem Basiselement der Grundplatte kann auf die unterschiedlichsten Arten und Weisen erfolgen. So ist beispielsweise eine Verklippsung, eine Verschraubung, eine Verklebung oder eine Verschweißung denkbar. Die Anbringung der Funktionskomponenten in den Aufnahmen der Einbauelemente kann ebenfalls auf unterschiedliche Weise erfolgen, wobei sich insbesondere die zuvor genannten Verbindungstechniken anbieten.

Bei den erfindungsgemäß an der Trägervorrichtung anbringbaren Funktionskomponenten handelt es sich insbesondere um Lautsprecher, manuelle oder motorische Fensterheber, Türschlösser, Abdeckelemente zu Erschwerung der Manipulation der Türschlösser, Armlehnen, Türverkleidungselemente, aktive oder passive Sicherheitselemente oder Türöffner.

Eine für die erfindungsgemäße Trägervorrichtung ausgelegte Fahrzeugtür ist also versehen mit einer Türaußenwand, einer Türinnenwand und einer Türinnenwandverkleidung, wobei die Türinnenwand eine Aussparung aufweist, in die die erfindungsgemäße eingesetzt ist.

Bei dieser Fahrzeug kann die Trägervorrichtung mit den Einbauelementen ganz oder teilweise Bestandteil der Türinnenwandverkleidung sein.

Schließlich lässt sich die Trägervorrichtung erfindungsgemäß für die einzelnen Funktionskomponenten unterschiedlicher Fahrzeugtüren einsetzen, wobei für sämtliche Fahrzeugtüren die gleiche Grundplatte (20) verwendet wird.

Die Erfindung wird nachfolgend anhand der Zeichnung näher erläutert. Im einzelnen zeigen
- Fig. 1: eine Fahrzeugtür mit einer Trägervorrichtung, deren Grundplatte ein für einen ersten Lautsprechertyp erstes Einbauelement aufweist,
- Fig. 2: eine Fahrzeugtür mit einer Trägervorrichtung, deren Grundplatte ein für einen zweiten Lautsprechertyp erstes Einbauelement aufweist,
- Fig. 3: eine Schnittansicht entlang der Linie III-III der Fig. 1 zur Verdeutlichung der Konstruktion des ersten Einbauelements zwecks Aufnahme unterschiedlich großer Lautsprecher vom ersten Typ,
- Fig. 4: eine Schnittansicht entlang der Linie IV-IV der Fig. 2 zur Verdeutlichung der Möglichkeit des Einbaus von Lautsprechern in unterschiedlichen Ausrichtungen,
- Fign. 5 und 6: Ansichten von Fahrzeugtüren mit Trägervorrichtungen, die unterschiedliche Einbauelemente für unterschiedliche Typen von Funktionskomponenten aufweisen und
- Fign. 7 und 8: den Zusammenbau einer Grundplatte aus einem Basiselement und unterschiedlichen Anbauelementen für die vorderen Fahrzeugtüren eines Fahrzeuges, wenn dieses als 2- bzw. 3-Türer (Fig. 7) oder als 4-bzw. 5-Türer (Fig. 8) ausgestaltet ist.

In den Fign. sind zahlreiche unterschiedliche Ausführungsbeispiele der erfindungsgemäßen Trägervorrichtung gezeigt. Dabei sind sowohl für die Trägervorrichtungen der unterschiedlichen Ausführungsbeispiele als auch für die einzelnen Bestandteile dieser unterschiedlichen Ausführungsbeispiele jeweils die gleichen Bezugszeichen verwendet worden, sofern die einzelnen Bestandteile bau- bzw. funktionsgleich sind.

In den Fign. sind Innenansichten von Fahrzeugtüren 10 gezeigt, deren Innentürverkleidungen abgenommen sind, so dass die Trägervorrichtungen 12 für die Funktionskomponenten der Fahrzeugtüren zu erkennen sind. Die Fahrzeugtür selbst weist eine Türaußenwand 14 sowie eine Türinnenwand 16 auf, in der sich eine Aussparung 18 befindet, in die die Grundplatte 20 der Trägervorrichtung 12 eingesetzt ist. Vor diese Aussparung 18 wird die (nicht dargestellte) Türinnenwandverkleidung gesetzt, die im Regelfall über eine Armlehne verfügt, welche wiederum an der Grundplatte 20 befestigt sein kann.

Der Unterschied in den dargestellten Fahrzeugtüren 10 der Fign. besteht in den unterschiedlich ausgestalteten und/oder positionierten Funktionskomponenten, bei denen es sich im Fall der Ausführungsbeispiele zum einen um Lautsprecher und zum anderen um Fensterheber handelt, und zwar manuell und motorisch betätigbare Fensterheber.

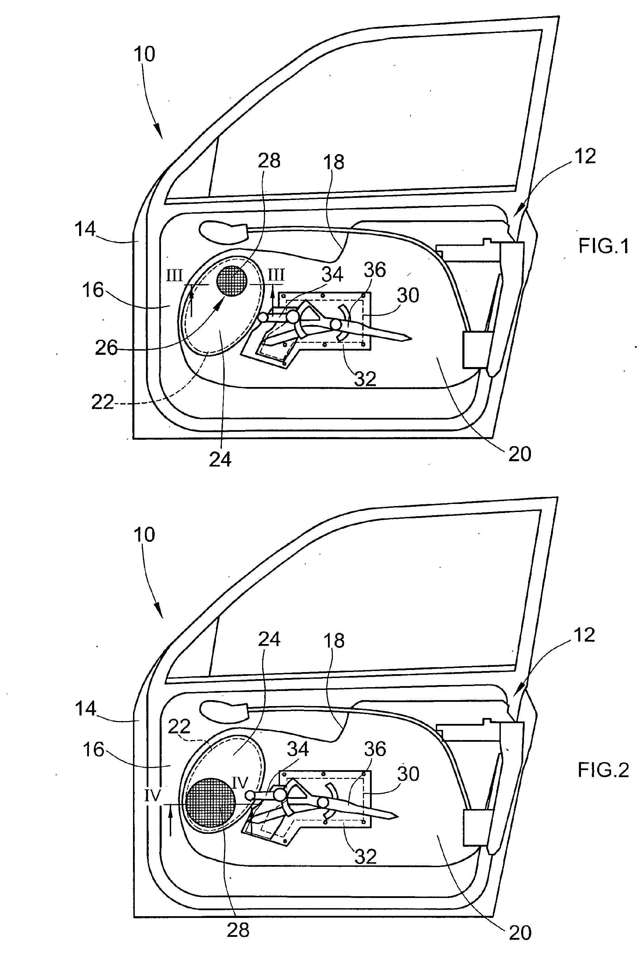

Bezogen auf die Fig. 1 weist die Grundplatte 20 eine erste Aussparung auf, die eine erste Aufnahme 22 bildet und in die ein erstes Einbauelement 24 eingesetzt ist, das seinerseits mit einer Aufnahme 26 für einen ersten Lautsprecher 28 versehen ist. Ferner ist die Grundplatte 20 mit einer zweiten Aufnahme 30 versehen, in die ein zweites Einbauelement 32 eingesetzt ist. An diesem zweiten Einbauelement 32 ist ein über eine Kurbel 34 manuell betätigbarer Fensterheber 36 angebracht. Die Anbringungsposition des Fensterhebers 36 kann innerhalb des zweiten Einbauelements 32 in gewissen Grenzen variabel gehalten werden.

Wie man anhand von Fig. 2 erkennt, wird nun, um beispielsweise einen Lautsprecher 28 eines anderen Typs einsetzen zu können, ein anders ausgestaltetes erstes Einbauelement 24 verwendet. Beiden ersten Einbauelementen 24 der Fign. 1 und 2 ist dabei gemeinsam, dass sie in die Aufnahme 22 der Grundplatte 20 einsetzbar sind. Anhand von Fig. 2 ist auch zu erkennen, dass der Fensterheber 36 bezogen auf Fig. 1 an einer anderen Position an dem zweiten Einbauelement 32 angebracht ist.

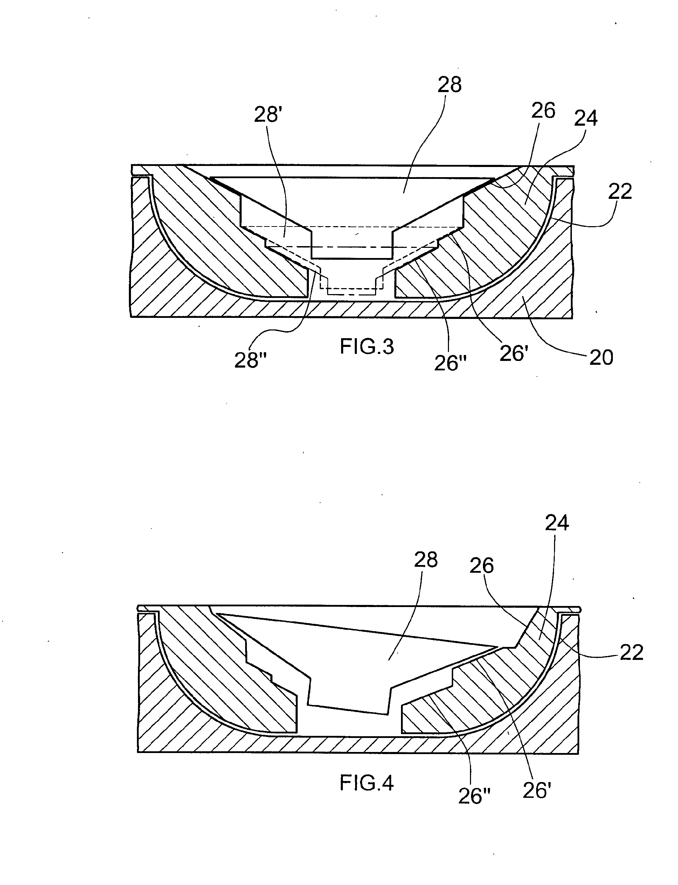

Die Fign. 3 und 4 zeigen zwei Beispiele für alternative Ausgestaltungen der ersten Einbauelemente 24 für Lautsprecher 28. Gemäß Fig. 3 weist das erste Einbauelement 24 drei Aufnahmen 26,26',26" für unterschiedlich große Lautsprecher 28 auf, wobei die wahlweise in den Aufnahmen 26' und 26" unterbringbaren Lautsprecher 28',28" gestrichelt dargestellt sind. Bei dem Ausführungsbeispiel gemäß Fig. 4 weist das erste Einbauelement 24 ebenfalls mehrere Aufnahmen 26,26',26" für unterschiedlich große und unterschiedlich geneigte Lautsprecher 28 auf.

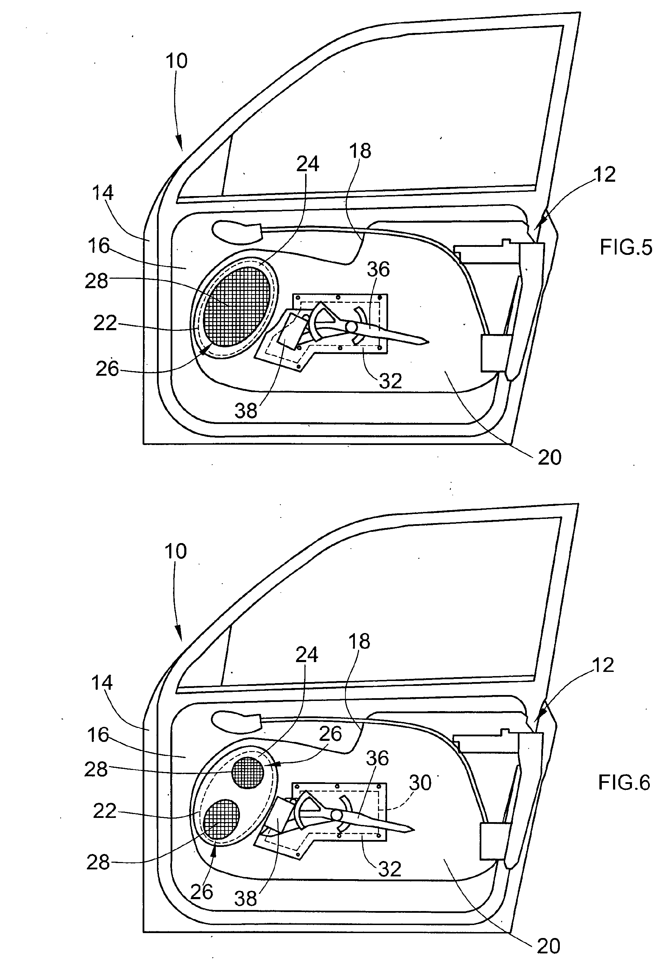

In den Fign. 5 und 6 sind zwei weitere Beispiele für Trägervorrichtungen 12 mit Grundplatten 20 dargestellt, deren erste und zweite Einbauelemente 24,32 zur Aufnahme unterschiedlicher Lautsprecher 28 bzw. manuell und motorisch betriebener Fensterheber 36 ausgebildet sind. So zeigt beispielsweise Fig. 5 den Fall, dass das Einbauelement 24 einen großflächigen ovalen Lautsprecher 28 aufnimmt, während im Falle von Fig. 6 das erste Einbauelement 24 zwei Aufnahmen 26 für zwei kleinere Lautsprecher 28 aufweist. In beiden Ausführungsbeispielen gemäß den Fign. 5 und 6 ist die Handkurbel zur Betätigung des Fensterhebers 36 durch einen Elektromotor 38 ersetzt. Das zweite Einbauelement 32 ist dazu entsprechend ausgelegt bzw. weist eine entsprechende Aufnahme auf. Darüber hinaus ist der gesamte Fensterheber 36 bei Fig. 6 gegenüber dem Ausführungsbeispiel nach Fig. 5 zum ersten Einbauelement 24 hin versetzt, wobei jedoch der Fensterheber 36 weiterhin an dem zweiten Einbauelement 32 befestigt ist.

Bei sämtlichen zuvor beschriebenen Ausführungsbeispielen befinden sich an der Grundplatte 20 ferner noch das Türschloss 40, das von innen über einen Betätigungshebel 42 geöffnet werden kann, dessen Bewegung über einen Bowdenzug 44 auf das Schloss 40 übertragen wird. Darüber hinaus befindet sich an der Grundplatte 20 bei sämtlichen Ausführungsbeispielen noch ein Abdeckelement 46, das dem Schutz vor Manipulationen des Türschlosses 40 dient.

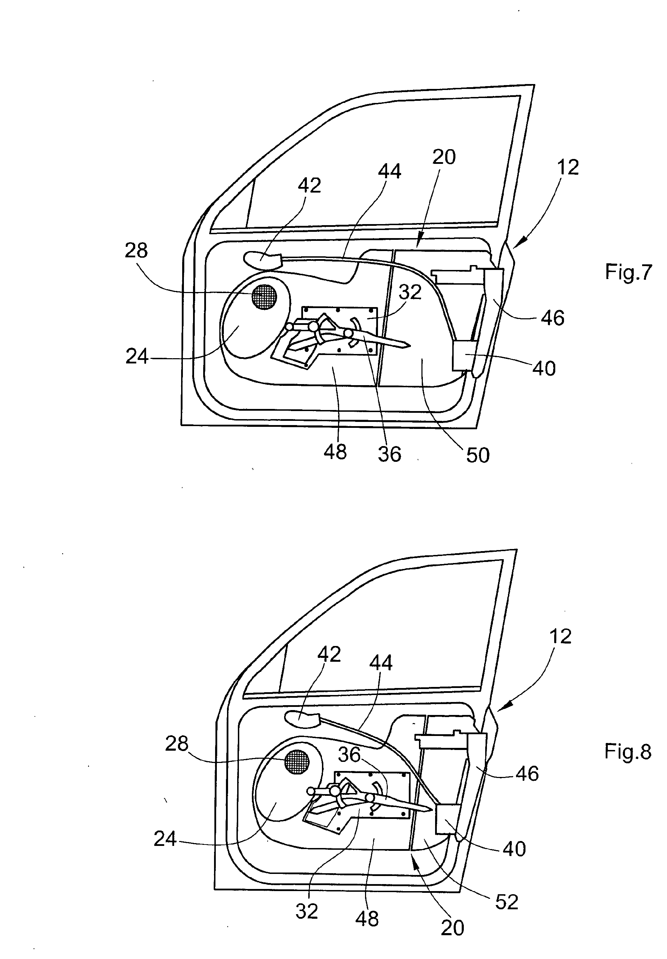

Anhand der Fign. 7 und 8 werden noch zwei weitere Varianten der erfindungsgemäßen Trägervorrichtung 12 beschrieben. Beiden Varianten ist gemein, dass die Grundplatte 20 aus zwei Elementen besteht, und zwar aus einem Basiselement 48 und einem von zwei unterschiedlich großen Anbauelementen 50,52. Während die Basiselemente 48 wiederum die ersten und zweiten Einbauelemente 24,32 für den Lautsprecher 28 und den Fensterheber 36 aufweisen, sind an den Anbauelementen 50,52 das Türschloss 40 und das Abdeckelement 46 zum Schutze des Schlosses 40 vor Manipulationen angebracht. Zum Türschloss 40 führt wiederum der Bowdenzug 44, der von dem Innen-Betätigungshebel 42 zum Öffnen des Türschlosses 40 kommt.

Sinn und Zweck des auch bezüglich der Grundplatte 20 modularen Aufbaus der Trägervorrichtungen 12 der Fign. 7 und 8 ist es, für ein und denselben Fahrzeugtyp auch dann noch bezüglich der Grundplatte 20 der Trägervorrichtung 12 möglichst gleiche Teile in Form der Basiselemente 48 verwenden zu können, wenn dieser Fahrzeugtyp als 2- bzw. 3-Türer und als 4- bzw. 5-Türer ausgeführt ist. Dann nämlich unterscheiden sich die vorderen Fahrzeugtüren in ihrer Länge voneinander. So zeigt beispielsweise Fig. 7 eine der beiden vorderen Fahrzeugtüren bei einem 2- bzw. 3-Türer, während Fig. 8 eine der beiden vorderen Türen im Falle eines 4- bzw. 5-Türers dieses Fahrzeugtyps zeigt. Zu erkennen ist, dass das Basiselement 48 mit den ersten und zweiten Einbauelementen 24,32 in beiden Fällen verwendet werden kann und sich die Trägervorrichtungen 12 lediglich durch die unterschiedlich breiten Anbauelemente 50,52 unterscheiden, wobei diese beiden Anbauelemente 50,52 jeweils wiederum das Türschloss 40 und das Abdeckelement 46 tragen. Auf diese Weise können durch Verbinden ein und desselben Basiselements 48 mit unterschiedlich breiten Anbauelementen 50,52 unterschiedlich breite Trägervorrichtungen 12 zusammengebaut werden.

## Patentansprüche

1. Trägervorrichtung für einzelne Funktionskomponenten einer Fahrzeugtür zum Einbau in dieser, mit
- einer Grundplatte (20), die eine erste Aufnahme (22) für eines von mehreren ersten Einbauelementen (24) aufweist, an der mindestens ein Teil einer Funktionskomponente (28) anbringbar ist,
- wobei sich jedes der mehreren ersten Einbauelemente (24) in die Aufnahme (22) einsetzen lässt und die Funktionskomponenten (28) oder Teile davon an den mehreren ersten Einbauelementen (24) unterschiedlich positionierbar und/oder anbringbar sind.

2. Trägervorrichtung nach Anspruch 1, **dadurch gekennzeichnet, dass** die ersten Einbauelemente (24) unterschiedlich ausgestaltete und/oder angeordnete Aufnahmen (22) für erste Funktionskomponenten (28) oder Teile davon aufweisen.

3. Trägervorrichtung nach Anspruch 1 oder 2, **dadurch gekennzeichnet, dass** die Grundplatte (20) zumindest eine weitere Aufnahme (30) aufweist und dass diese weitere Aufnahme (30) zur Aufnahme eines von mehreren zweiten Einbauelementen (32) vorgesehen ist, an denen zumindest Teile zweiter Funktionskomponenten (36) anbringbar sind.

4. Trägervorrichtung nach Anspruch 3, **dadurch gekennzeichnet, dass** die zweiten Einbauelemente (32) unterschiedlich ausgestaltete und/oder angeordnete Aufnahmen für zweite Funktionskomponenten (36) oder Teile davon aufweisen.

5. Trägervorrichtung nach einem der Ansprüche 1 bis 4, **dadurch gekennzeichnet, dass** die Grundplatte (20) mehrteilig ist und ein Basiselement (48) aufweist, an dem eines von mehreren ersten Anbauelementen (50,52) befestigbar ist, wobei die ersten Anbauelemente (50,52) unterschiedlich ausgestaltet sind.

6. Trägervorrichtung nach Anspruch 5, **dadurch gekennzeichnet, dass** die ersten Anbauelemente (50,52) derart unterschiedlich ausgestaltet sind, dass sich die aus dem Zusammenbau des Basiselements (48) und jeweils eines unterschiedlichen ersten Anbauelements (50,52) ergebenden Grundplatten (20) in mindestens einer Dimension unterscheiden.

7. Trägervorrichtung nach Anspruch 5 oder 6, **dadurch gekennzeichnet, dass** an dem Basiselement (48) auch eines von mehreren untereinander unterschiedlichen zweiten Anbauelementen anbringbar ist.

8. Trägervorrichtung nach einem der Ansprüche 5 bis 7, **dadurch gekennzeichnet, dass** die erste Aufnahme (22) und, sofern vorhanden, die zweite Aufnahme (30) der Grundplatte (20) in dem Basiselement (48) oder in den ersten oder zweiten Anbauelementen (50,52) oder teilweise in dem Basiselement (48) und in den ersten oder zweiten Anbauelementen (50,52) ausgebildet ist/sind.

9. Trägervorrichtung nach einem der Ansprüche 1 bis 6, **dadurch gekennzeichnet, dass** an den ersten und/oder zweiten Einbauelementen (24,32) ein Lautsprecher (28), ein Fensterheber (36), ein Türschloss (40), ein Abdeckelement (46) zu Erschwerung der Manipulation des Türschlosses (40), eine Armlehne, ein Türverkleidungselement, ein aktives oder passives Sicherheitselement oder ein Türöffner anbringbar ist.

10. Fahrzeugtür mit
- einer Türaußenwand (14),
- einer Türinnenwand (16) und
- einer Türinnenwandverkleidung,
- wobei die Türinnenwand (16) eine Aussparung (18) aufweist, in die eine Trägervorrichtung (12) nach einem oder mehreren der Ansprüche 1 bis 8 eingesetzt ist.

11. Fahrzeugtür nach Anspruch 10, **dadurch gekennzeichnet, dass** die Trägervorrichtung (12) mit den Einbauelementen (24,32) ganz oder teilweise Bestandteil der Türinnenwandverkleidung ist.

12. Verwendung einer Trägervorrichtung für einzelne Funktionskomponenten unterschiedlicher Fahrzeugtüren nach einem der Ansprüche 1 bis 8, wobei für sämtliche Fahrzeugtüren die gleiche Grundplatte (20) verwendet wird, und wobei die Grundplatte (20) in Abhängigkeit von der Fahrzeugtür mit unterschiedlichen Einbauelementen (24,32) und/oder unterschiedlichen Anbauelementen (50,52) versehen ist.
